# EUROPEAN PATENT APPLICATION

(11) **EP 4 756 362 A1**
(43) Date of publication of application: **10.06.2026**
(21) Application number: 24218235.0
(22) Date of filing: 09.12.2024
(51) Int. Cl.: G01B 5/20, G01B 5/25

(54) **METHOD FOR AUTOMATICALLY GENERATING A REFERENCE POSITIONING SYSTEM, RPS, ALIGNMENT PROGRAM FOR SHAPE MEASUREMENT OF A WORKPIECE**

(71) Applicant: Mitutoyo Corporation, Kawasaki, Kanagawa 213-8533 (JP); Mitutoyo Europe GmbH, 41469 Neuss (DE)
(72) Inventor: Madsen, Frank Uwe, Oberndorf am Neckar (DE); Fogel, Jürgen, Helmstadt-Barger (DE); Bruckdorfer, Till Martin, Schramberg (DE); Putnik, Erich Otto, Oberndorf am Neckar (DE)
(74) Representative: Müller-Boré & Partner Patentanwälte PartG mbB

(57) **Abstract**

The application relates to a method for automatically generating a reference positioning system, RPS, alignment program for shape measurement of a workpiece, the method comprising the steps of: acquiring datum targets of the workpiece from CAD, computer aided design, model information of the workpiece; generating a coordinate system based on the datum targets; determining alignment of the workpiece; and generating, using the coordinate system, a collision free workpiece program and/or a collision free movement path for a measuring probe of a shape measurement system.

## Description

The present disclosure relates to method for automatically generating a reference positioning system, RPS, alignment program for shape measurement of a workpiece, a respective computer-readable program and a shape measurement system configured to carry out said method.

One way of measuring accuracy of produced workpieces is provided by contact measurements in which a probe contacts specific points on the surface of a workpiece. It may be measured if the produced workpiece is within predetermined tolerances to ensure proper functioning of the work piece, in particular in assemblies.

Probes are used to measure the geometry of a workpiece, which can measure parameters such as diameter, length, depth of holes, radii, etc. The probes are moved to come into contact with specific points crucial for determining the geometry accuracy of the workpiece.

For identifying and defining said specific contact points (datum targets), it is required to identify important parts of the workpiece, i.e., surfaces or holes (datum features). Selecting the datum features and datum targets is crucial for obtaining an accurate and reliable measurement. This is usually done manually and requires an experienced worker.

For assisting the worker to generate datum features and/or datum targets, information from a Computer Aided Design (CAD) model of the workpiece to be measured may be used.

A known workflow includes an import of CAD model datum targets either defined as visible product manufacturing information (PMI) data in the CAD file and/or on a separate (paper) blueprint. The worker interprets the PMI data and/or blueprint and decides what datum features should be measured as datum targets. A respective RPS, reference positioning system, alignment is done only until a minimum of points fully constrain the coordinate system.

Thus, in the traditional workflow, the user is fully responsible to select the correct data and/or handle over constraint information, wherein over constraints are normally not handled automatically but are prevented.

Since demand of experienced workers for deciding on datum features and datum targets rises but availability is low, there is a need for an alternative to manually deciding on datum features and datum targets and manually generating a reference positioning system, RPS, alignment program for shape measurement of a workpiece.

It is therefore an object of the present invention to provide a method and system for automatically generating a reference positioning system, RPS, alignment program for shape measurement of a workpiece, in particular based on CAD model information.

### Summary of the Invention

This object is solved according to the invention by the features of the independent claims. Particular embodiments of the invention are subject of the dependent claims.

One aspect relates to a method for automatically generating a reference positioning system, RPS, alignment program for shape measurement of a workpiece, the method comprising the steps of: acquiring datum targets of the workpiece from CAD, computer aided design, model information of the workpiece; generating a coordinate system (datum reference frame) based on the datum targets; determining alignment of the workpiece; and generating, using the coordinate system, a collision free workpiece program and/or a collision free movement path for a measuring probe of a shape measurement system.

With a respective method, CAD model information may be used for automatically deciding on datum features and/or datum targets and generating a collision free workpiece program and/or collision free movement path for a measuring probe for measuring the workpiece. This increases accuracy of data selection and particularly avoids the necessity of manually performing said steps by a qualified worker. Accordingly, less qualified workers are necessary, which in particular avoids time delay of processing due to lack of workforce available. In addition, the method may offer enhanced identification of datum features for obtaining an improved tolerance measurement.

In some instances, the datum features (and particularly corresponding reference positioning system, RPS, or datum systems of geometrical components for design and/or manufacturing) are established according to ISO 5459:2024.

In some instances, datum targets are portions of datum features of a workpiece. Datum features are or correspond to real, tangible features of a workpiece and are usually important functional surfaces or holes. Specifically, datum targets are or refer to theoretically exact points, lines and/or axes, etc. that are or can be established from the datum features and are simulated by measurement equipment. Datum features particularly are or correspond to the real features of a workpiece that will be physically measured.

The method allows an automatic workflow, which may include one or more of import of a CAD file of the workpiece, reading required information from the CAD file, based on semantic PMI data which can be read from the CAD file, it may be decided which datum features need to be automatically generated based on the CAD geometry and measured with the automatically generated workpiece program. This may e.g. include a tolerance or planarity read from the CAD file, based on which it is decided that a related geometry, such as several surfaces, may be measured as a plane.

It may be further (particularly automatically) decided, based on the CAD file information, how to align the workpiece for an improved shape measurement process.

If advantageous, datum target optimization (particularly automatically) may be performed e.g. by using "remove outliers" and/or by "prioritizing datum features and/or datum targets" as further described below.

Also, the method may automatically generate a collision free workpiece program and/or movement path for a measuring probe using the generated coordinate system.

Datum targets of the workpiece may be directly obtained or derived from CAD model information of the workpiece, in particular from PMI, product manufacturing information, of the CAD model information of the workpiece.

Alternatively or in addition, acquiring datum targets of the workpiece from CAD model information of the workpiece may include one or more of the following steps: reading at least part of the PMI, product manufacturing information, from CAD model information of the workpiece; identifying one or more datum features of the workpiece; measuring datum features of the workpiece; and generating one or more datum targets for said datum features.

PMI, product manufacturing information, may include one or more of manufacturing technology, surface properties, color, material, material properties and similar characteristics of the workpiece.

Thus, characteristics of the workpiece apart from its geometry are considered for determining datum features. This may allow improved results, in particular due to appropriate consideration of further relevant characteristics of the workpiece, which otherwise might be disregarded.

The method may further comprise automatic handling of over-constraints by optimization of datum targets to obtain a minimum number of datum targets. Particular datum targets may be selected out of a number of possible datum targets to obtain reduced complexity and computing time.

Different optimization strategies may be performed by the method:

For example, optimization of datum targets may include reducing the number of datum targets based on identifying and removing outlier datum targets.

This may be particularly advantageous if the number of excess datum targets, i.e., the amount of datum targets above the number of minimum necessary datum targets to sufficiently define a datum feature, is low, e.g., equal or lower than 6 or 3, in particular 1. For example, 3+1 for a plane, 2+1 for a line and 1+1 for a point. Further details are described below with respect to the figures.

Alternatively or in addition, optimization of datum targets may include prioritizing datum targets. This strategy may be particularly advantageous if the number of excess datum targets is high, e.g., equal or greater than 5 or 7, because it may more efficiently determine the optimal datum targets.

For example, prioritizing datum targets may include: prioritizing all datum targets with the same priority; or prioritizing the datum targets decreasing along the sequence of datum targets; and/or prioritizing a first group of datum targets higher than a second group of datum targets, optionally prioritizing a third group of datum targets lower than the second group of datum targets; and/or prioritizing possible contact points higher than possible non-contacting points.

The different prioritizing strategies may be determined e.g. based on information regarding the manufacturing method and/or material and/or other characteristics of the workpiece.

An exemplary prioritizing strategy may be based on the quality of the datum targets. For example, if datum targets are positioned near a defect, said datum targets may be considered as low quality and they may be weighted lower than datum targets positioned far from a defect, which may be considered of higher quality.

Another exemplary prioritizing strategy may include grouping of datum targets given by PMIs and prioritizing said groups of datum targets. In particular, datum targets within one group may be prioritized with the same priority. In particular, datum targets for use as primary datum targets may be grouped and prioritized higher than datum targets for use as secondary datum targets.

A further exemplary strategy may be based on stability information of the workpiece. For example, if knowledge of an appropriate alignment taking into account stability (of a feature of the workpiece) is available, the stability can be increased by specifically prioritizing points of that feature with individually higher or lower weight. Stability information may be based on e.g. material, form (e.g. metal free form) and/or reinforcements/frame-like structures of the workpiece or of a feature of the workpiece.

As a particular example, prioritizing datum targets may be based on minimizing sum of square distances between nominal points ni and actual (measured) points ai of datum targets Ti. In this strategy, it is desired to determine a translation T and a rotation R so that the set of nominal points {n_i} fits to the set of actual (measured) points {a_i} ("best fit"). Further details are described below with respect to the figures.

As another particular example, prioritizing datum targets may be based on minimizing the maximum distance between nominal points n and associated actual points a of the datum targets.

Optionally, prioritizing may comprise weighting each datum target so that particular properties of the workpiece are considered appropriately. For example, if the workpiece is configured to be part of an assembly, a key datum target crucial for ensuring proper assemblance may be weighted high to dominate the optimization.

Determining the distribution of weights and their magnitude may be dependent on the strategy for automatic prioritization. The way of choosing the distribution of weights and their magnitude may depend on the chosen strategy for automatic prioritization.

For example, for primary datum targets a_1, a_2, a_3, secondary datum targets b_1, b_2 and tertiary datum target c_1, a weighting for prioritizing the different groups of datum targets with the sequence of datum targets being a_1, a_2, a_3, b_1, b_2, c_1 may be (3w, 3w, 3w, 2w, 2w, w) with w = 100/14. Thus the group of the primary datum targets is weighted higher than the group of secondary datum targets, which is weighted higher than the (group of) tertiary datum target(s).

Prioritizing of datum targets may comprising prioritizing datum features of the workpiece. This is particularly advantageous in order to ensure that a key datum feature is appropriately considered in the shape measurement.

For example, a key datum feature may be the largest surface of the workpiece, perpendicular surfaces of the workpiece, a mounting surface of the workpiece and/or a mounting hole (e.g. a bearing hole) of the workpiece.

Furthermore, the method may include an additional usage of CAD entities for the calculation of the coordinate system.

Moreover, the method may automatically generate a "mating feature" and/or a "contacting feature".

A contacting feature may be a plane or sphere. The PMI information may comprise a datum feature defined as contacting feature, e.g., a datum feature with a modifier "CF".

Any contacting feature may be a mating feature.

Any kind of entity attached to and/or included in the PMI information may be used to describe the datum feature(s).

Another aspect relates to a computer-readable program comprising instructions which, when loaded and executed on a suitable system, cause the system to carry out the steps of the method according to an aspect disclosed herein.

The computer-readable program may in particular comprise instructions for acquiring datum targets of the workpiece from CAD, computer aided design, model information of the workpiece; generating a coordinate system based on the datum targets; determining alignment of the workpiece; and generating, using the coordinate system, a collision free workpiece program and/or a collision free movement path for a measuring probe of a shape measurement system.

A further aspect relates to a shape measurement system comprising a host computer configured to carry out the method according to an aspect disclosed herein.

The shape measurement system may further comprise one or more of: a table for mounting a workpiece to be measured; a measuring probe for being brought into contact with the workpiece; a moving mechanism for moving the measuring probe; and a control unit for controlling a position of the measuring probe and operating the moving mechanism so as to measure positions of datum features of the workpiece.

The movement mechanism is advantageously configured to move the measuring probe in a 3D space in which the workpiece is mounted on the table. The movement of the measuring probe may be, e.g., linearly in each one of X, Y and Z direction.

The present invention is further explained in detail by the following detailed description and the appended drawings, in which particular embodiments are illustrated by way of example, wherein the present invention is in no way limited by these particular embodiments. It should be understood that even though embodiments are separately described, single features thereof may be combined to additional embodiments.

### Brief description of the drawings

- Fig. 1: shows a flow diagram of an exemplary method for automatically generating a reference positioning system, RPS, alignment program for shape measurement of a workpiece;
- Fig. 2: shows a flow diagram of an exemplary datum target optimization process;
- Fig. 3: shows an exemplary shape measurement system for shape measurement of a workpiece;
- Figs. 4a & 4b: show examples of prioritizing datum targets.

### Description of particular embodiments

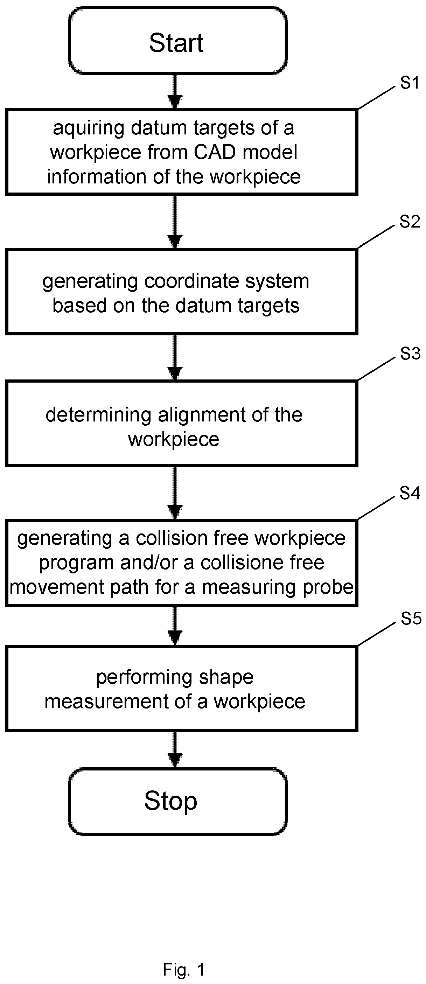

**Figure 1** shows a flow diagram of an exemplary method for automatically generating a reference positioning system, RPS, alignment program for shape measurement of a workpiece 12 and performing a shape measurement of a workpiece 12.

The illustrated method comprises the following steps:
In connection with step S1 - acquiring datum targets of the workpiece from CAD, computer aided design, model information of the workpiece 12,datum targets of the workpiece 12 may be directly obtained from CAD model information of the workpiece 12, e.g., from PMI of the CAD model information. Alternatively or in addition, acquiring datum targets of the workpiece 12 from CAD model information of the workpiece 12 may comprise identifying one or more datum features of the workpiece 12 and, optionally, measuring datum features of the workpiece; and generating datum targets for said datum features.

In step S2 a coordinate system is generated based on the datum targets, wherein the coordinate system (also referred to as datum reference frame) particularly forms the foundation for the measurement of the workpiece 12. Specifically, the geometric dimensions and tolerances of a workpiece are defined in reference to such coordinate system. The coordinate system comprises three orthogonal planes defined by datum targets.

In connection with step S3 - determining alignment of the workpiece 12, a robust workpiece alignment may be determined by level or spatial alignment, rotation or planar alignment, and/or origin or axis translations.

In connection with step S4 - generating, using the coordinate system, a collision free workpiece program and/or a collision free movement path for a measuring probe 6 of a shape measurement system 1, one or more instructions for causing movement of the measuring probe 6 to the plurality of datum targets, respectively datum features, of the workpiece 12 may be generated taking into account the geometry and alignment of the workpiece 12.

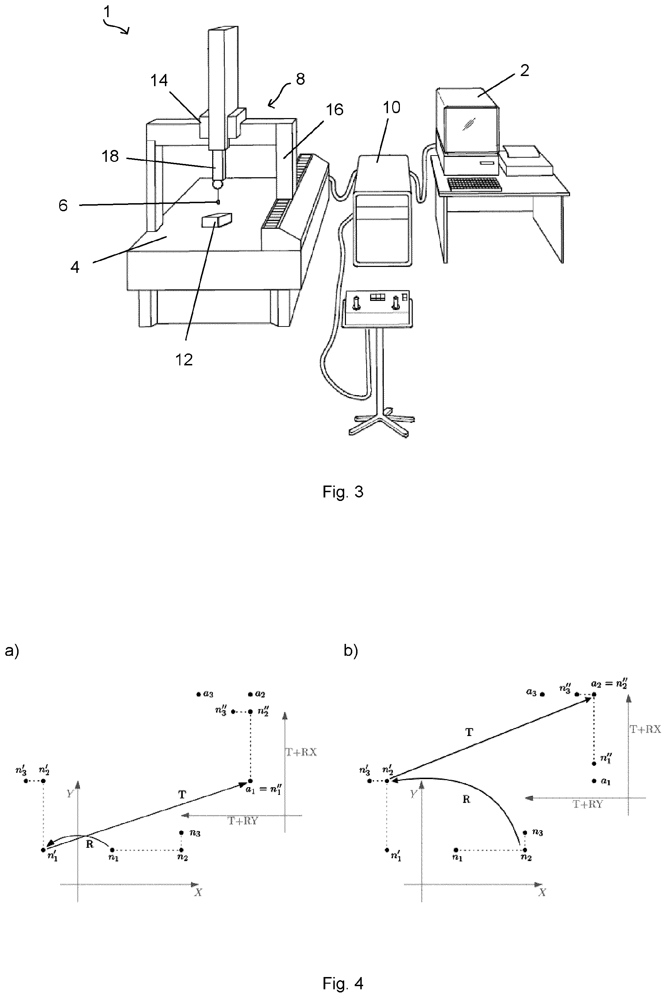

In connection with step S5 - performing a shape measurement of a workpiece, the shape measurement of the workpiece may be performed by moving or displacing a measuring probe 6 as described hereinafter in connection with Fig. 3 to the datum targets, respectively to the datum features, of the workpiece 12.

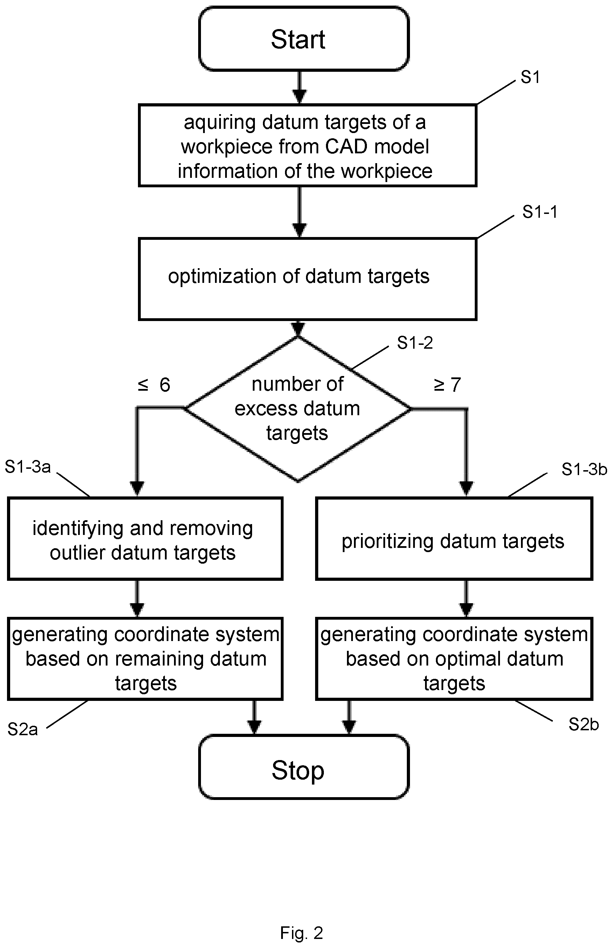

Optionally, the method may further include the step of datum target optimization, in particular performed between step S1 and step S2. Examples thereof are illustrated in Fig. 2 and described in the following.

**Figure 2** shows a flow diagram of an exemplary datum target optimization process, e.g., for use in the method shown in Fig. 1 and described herein.

Identifying and removing outlier datum targets according to an example of step S1-3a may be used for optimization of datum targets. This approach is particularly advantageous for finding a suitable base plane for specific measurements and/or if the workpiece is expected to be accurate due to the way of its manufacturing.

If the minimum necessary number of datum targets plus at least one additional datum target is available for a datum feature (step S1-2), this approach may be considered for efficiently and reliably handling over constraints. Preferably, the number of excess datum targets is 6 or less, more preferably 3 or less, most preferably 1, for this approach.

As an example, the minimum number of datum targets necessary for a plane is 3 plus 1 additional datum target (i.e., A1-A4 for datum plane pA).

The optimization may comprise the following steps:
First, the datum targets are distributed into three sets A, B, C

The distribution may be assigned manually and/or may be based on PMI information of the CAD model.

In an example, set A may comprise datum targets A1 -A4, set B may comprises datum targets B1-B3 and set C may comprise datum targets C1-C2.

Then, the datum targets of set A are passed into a tangential-plane-solver, which creates resulting plane pA and separates points into 'contacting points', A0, which are located on the resulting plane pA, and 'outlier points', A1, which are located 'below' that plane. Three or more points are located on the resulting (primary) plane, pA.

The same steps are performed, if applicable, for (secondary) plane pB:
Datum targets in set B are passed into a tangential-plane-solver, which creates resulting plane pB with constraint to pA and separates datum targets into 'contacting points', B0, and 'outlier points', B1, wherein pB is perpendicular to pA. Two or more points are located on the resulting plane, pB.

The same steps are performed, if applicable, for (tertiary) plane pC:
Datum targets in set C are passed into a tangential-plane-solver, which creates result plane pC with constraints to pA and pB and separates datum targets into 'contacting points', C0, and 'outlier points', C1, wherein pC is perpendicular to pA and pB. One or more points are located on the resulting plane, pC.

In particular, a tangential-plane solver may be configured for calculation of parameters of a plane such that the plane is substantially tangential to the datum feature represented by the corresponding datum targets. The resulting parameter(s) describe(s) a plane, which contains at least some of the datum targets. Said datum targets are defined as "contacting points".

Alternatively, if the number of excess datum targets is larger (step S1-2), e.g., equal or greater than 5, preferably equal or greater than 7, an optimization of datum targets by using prioritizing datum targets may be advantageous because it may allow a faster and/or more reliable result.

A datum target optimization according to an example of step S1-3b is shown in Fig. 4 and described further below.

**Figure 3** shows an exemplary shape measurement system 1 for shape measurement of a workpiece 12, which may at least partly use the datum targes and/or datum features determined as above. The shown shape measurement system 1 is in particular configured to carry out the method for automatically generating a reference positioning system, RPS, alignment program for shape measurement of a workpiece 12 according to an aspect herein.

Specifically, the shape measurement system 1 comprises a host computer 2 for carrying out said method.

The shape measurement system 1 may comprise a table 4 for supporting a workpiece 12 and/or providing a mounting base for a workpiece support.

The shape measurement system 1 of Fig. 3 includes a moving mechanism 8 and a control unit 10 configured to control the moving mechanism 8 by being operated by the host computer 2.

The movement mechanism 8 includes a Y slider 16, an X slider 14 and a Z mover 18. The Y slider 16 is provided to be slidable on the table 4 in a Y direction. The X slider 14 slides along a beam of the Y slider 16 in an X direction. The Z mover 18 is fixed to the X slider 14. The Z mover 18 moves in a Z direction by moving up away from the table 4 or down towards the table 4.

A measuring probe 6 is positioned at the top of the Z mover 18 and configured to contact the workpiece 12 to measure datum targets, respectively, datum features of the workpiece 12 represented by datum targets.

The Y slider 16, the X slider 14, and the Z 18 mover may each be attached with one or more drive motors and encoders. The drive of each drive motor may be controlled by a drive control signal from the control unit 10. Each encoder detects a moving amount of the Y slider 16, the X slider 14 or the Z mover 18 and outputs a detection value to the control unit 10 and/or the host computer 2.

The host computer 2 may operate the control unit 10 and/or the moving mechanism 8 so as to move the measuring probe 6 to respective (nominal) datum targets and measuring their actual position at the workpiece 12.

This function is particularly for optimization of datum targets to handle over constraints by prioritizing datum targets by minimizing sum of square distances between respective nominal points ni and actual (measured) points ai of datum targets Ti.

In this mode, the measuring probe 6 is moved by the moving mechanism 8 to come into contact with the workpiece 12 at a plurality of datum targets and the positions of the contact points are measured.

For optimization, the datum targets may be prioritized by comparing the sum of square distances between the nominal points and the corresponding contact points actually measured. Optimization may be performed by the host computer 2 of the shape measurement system 1.

Alternatively to what is described above, the shape measurement system 1 may be configured to be coupled to a separate machine comprising a respective table 4, measuring probe 6, moving mechanism 8 and control unit 10.

**Figures 4a and 4b** show examples of prioritizing datum targets e.g. including a "bestfit" that minimizes the sum of squared distances between nominal points and actual points, e.g. as in step S1-3b shown in Fig. 2.

In particular, if the number of excess datum targets is large, e.g., equal or greater than 5, preferably equal or greater than 7, an optimization of datum targets by using this approach may be advantageous because it may allow a more efficient and/or more reliable result.

A datum target T_i is considered as a pair of nominal point n_i and actual (measured) point a_i. For RPS alignment, it is desired to find a translation T and a rotation R so that the set of nominal points {n_i} fits to the set of actual points {a_i}.

In Figs. 4a and 4b, two alignments are illustrated with highest prioritization for T_1 = (n_1, a_1) (Fig. 4a) and with highest prioritization for T_2 = (n_2, a_2) (Fig. 4b).

The notation in figures 4a and 4b is as follows: T = translation, R = rotation, n_i = nominal points, n'_i = R*n_i rotated nominal points, n"_i = T*n'_i = translated (and rotated) nominal points, a_i = measured points.

The underlying optimization relies e.g. on a bestfit that minimizes the sum of squared distances, e.g. min_{T,R} sum_{i} d(T+R(n_i),a_i)^2.

Weighting datum targets according to this example corresponds to a weighted optimization, where each datum target T_i receives a weight w_i, which may be taken into account by min_{T,R} sum_{i} w_i * d(T+R(n_i),a_i)^2.

In Fig. 4a, an exemplary weight may be (w_1,w_2,w_3) = (1000,1,1), whereas in Fig. 4b, an exemplary weight may be (w_1,w_2,w_3) = (1,1000,1).

Determining the distribution of weights and their magnitude may be dependent on the strategy for automatic prioritization and/or geometry of the workpiece.

For example, as further described above, a prioritization strategy may include: prioritizing all datum targets with the same priority; or prioritizing the datum targets decreasing along the sequence of datum targets; and/or prioritizing a first group of datum targets higher than a second group of datum targets, optionally prioritizing a third group of datum targets lower than the second group of datum targets; and/or prioritizing possible contact points higher than possible non-contacting points.

Subsequently to the optimization step, the coordinate system is generated based on the optimized datum targets (see step S2b in Fig. 2).

### List of Reference Numerals

- 1: shape measurement system
- 2: host computer
- 4: table
- 6: measuring probe
- 8: moving mechanism
- 10: control unit
- 12: workpiece
- 14: X slider
- 16: Y slider
- 18: Z mover

## Claims

1. Method for automatically generating a reference positioning system, RPS, alignment program for shape measurement of a workpiece (12), the method comprising the steps of:
acquiring (S1) datum targets of the workpiece from CAD, computer aided design, model information of the workpiece (12);
generating (S2) a coordinate system based on the datum targets;
determining (S3) alignment of the workpiece (12); and
generating (S4), using the coordinate system, a collision free workpiece program and/or a collision free movement path for a measuring probe (6) of a shape measurement system (1).

2. The method of claim 1, wherein acquiring (S1) datum targets of the workpiece (12) from CAD model information of the workpiece includes:
reading PMI, product manufacturing information, from CAD model information of the workpiece (12);
identifying datum features of the workpiece (12);
measuring datum features of the workpiece (12); and
generating datum targets for said datum features.

3. The method of claim 1 or 2, further comprising automatic handling of over-constraint by optimization (S1-1) of datum targets to obtain a minimum number of target datums.

4. The method of claim 3, wherein optimization of datum targets includes reducing the number of datum targets based on identifying and removing outlier datum targets.

5. The method of claim 3 or 4, wherein optimization of datum targets includes prioritizing datum targets.

6. The method of claim 5, wherein prioritizing datum targets includes:
prioritizing all datum targets with the same priority; or
prioritizing the datum targets decreasing along the sequence of datum targets; and/or
prioritizing a first group of datum targets higher than a second group of datum targets, optionally prioritizing a third group of datum targets lower than the second group of datum targets; and/or
prioritizing possible contact points higher than possible non-contacting points.

7. The method of claim 6, wherein prioritizing datum targets is based on minimizing sum of square distances between nominal points (ni) and actual points (ai) of datum targets (Ti).

8. The method of claim 6 or 7, further comprising weighting each datum target.

9. The method of any one of claims 3 to 8, further comprising prioritizing datum features of the workpiece (12).

10. Computer-readable program comprising instructions which, when loaded and executed on a suitable system, cause the system to carry out the steps of the method according to any one of the preceding claims.

11. Shape measurement system (1) comprising a host computer configured to carry out the method according to any one of claims 1 to 9, the shape measurement system (1) further comprising:
a table (4) for mounting a workpiece (12) to be measured;
a measuring probe (6) for being brought into contact with the workpiece (12);
a moving mechanism (8) for moving the measuring probe (6); and
a control unit (10) for controlling a position of the measuring probe (6) and operating the moving mechanism (8) so as to measure positions of datum features of the workpiece (12).
